# EUROPEAN PATENT SPECIFICATION

(11) **EP 4 187 212 B1**
(45) Date of publication and mention of the grant of the patent: **03.09.2025**
(21) Application number: 22209090.4
(22) Date of filing: 23.11.2022
(51) Int. Cl.: G01F 23/292

(54) **CONTACTLESS WASTE TANK LEVEL SENSING SYSTEMS**
KONTAKTLOSE SYSTEME ZUR MESSUNG DES ABFALLTANKFÜLLSTANDS
SYSTÈMES DE DÉTECTION SANS CONTACT DU NIVEAU D'UN RÉSERVOIR DE DÉCHETS

(30) Priority: 24.11.2021 IN 202141054169; 22.06.2022 US 202217846387
(43) Date of publication of application: 31.05.2023
(73) Proprietor: B/E Aerospace, Inc., Winston-Salem, NC 27105 (US)
(72) Inventor: ACHARYA, Pradeep, 560072 Bangalore (IN); RAO, Sreekanth Koti Ananda, 560061 Bangalore (IN); DATTATRI, Shyam Kumar, 560060 Bangalore (IN)
(74) Representative: Dehns

(56) References cited:
- US-A- 3 995 328
- US-A1- 2013 232 677
- US-B2- 10 935 413
- US-B2- 8 424 130

## Description

### FIELD

The present disclosure relates to drain systems and methods for improved waste tank level sensing and, more particularly, improved waste tank level sensing systems and methods for use in aircraft lavatories.

### BACKGROUND

Aircraft cabins include lavatories having drain systems disposed therein. Waste tank level sensing systems and methods may be prone to erroneous readings indicating a waste tank is in a full state when the waste tank is not. In this regard, an associated toilet may be inoperable during a period of time while the waste tank is deemed in the full state.

US 2013/232677 A1 discloses a control system for a flush toilet that includes a water delivery device for delivering a source of flush water to a bowl. The control system includes a controller and a user interface. The controller is operative to control the toilet through a flush sequence in a first mode and a second mode. In the first mode, the controller opens the water delivery device to deliver a predetermined amount of water to the bowl. In the second mode, the controller opens the water delivery device to deliver a user adjustable amount of water to the bowl. The user interface allows selection via the controller between the first and second modes. Where the toilet is a macerator toilet, the controller monitors current draw unit when the current draw satisfies a predetermined current condition. The controller may operate in a normal mode and a lockout mode. US 3,995,328 A discloses a vacuum flush waste disposal system for aircraft; wherein the required vacuum is acquired at altitude through the differential pressure between the aircraft cabin pressure and the ambient pressure above 15,000 feet. When the aircraft is below this altitude or on the ground, the vacuum is provided by a blower. For flushing the toilet bowl, a timing device is initially actuated and functions: to introduce a recirculated flush fluid into a flush ring in the upper portion of the toilet bowl; and to open a drain in the lower portion of the toilet bowl, leading to the vacuum waste line; whereby, the waste and flush water are rapidly propelled through the waste line towards a centrally located holding tank, by the differential pressure acting upon it. Once in the holding tank, the waste fluid is filtered out for further use as the recirculated flush fluid. US 10,935,413 B2 discloses a fuel sensing system that utilizes non-contact plastic optical fiber (POF) to optically sense the level of liquid fuel in a fuel tank. In one implementation, the fuel level sensing system includes: (i) a high-speed and high-power red laser diode; (ii) an ultra-high-sensitivity photon-counting avalanche photodiode; and (iii) a large-diameter and large-numerical-aperture graded-index POF. The fuel level is sensed when the avalanche photodiode first detects impinging light reflected by the POF end face and then detects impinging light reflected by the fuel surface in response to emission of a laser pulse by the red laser diode. A time delay detection circuit calculates the time interval separating the respective times of arrival. A fuel level calculator calculates the fuel level based on the time interval provided by the time delay detection circuit. US 8,424,130 B2 discloses a toilet monument, for a passenger transport vehicle, which comprises a receptacle that is configured to receive a mobile sanitary unit. The mobile sanitary unit comprises components for operating the sanitary unit. The mobile sanitary unit may be removed completely from the toilet monument in order to make it possible to affect decentralized cleaning and servicing of the mobile sanitary unit. The mobile sanitary unit may be, for example, to a toilet unit, a hand wash facility, a urinal or a shower unit.

### SUMMARY

A plumbing system for an aircraft is disclosed as claimed in claim 1.

In various embodiments, the system may further comprise a display device electronically coupled to the controller, the controller configured to send the waste water level to the display device. The system may further comprise an actuator electronically coupled to the controller, the controller configured to actuate the actuator in response to the controller determining the waste water level exceeded a level threshold. The actuator may be configured to lock a lavatory in an aircraft. The actuator may be configured to close a valve disposed between a toilet bowl and the waste tank. The contactless sensor may comprise a laser doppler sensor. The system may further comprise the waste tank and a transparent lens, the contactless sensor configured to transmit and receive a laser beam through the transparent lens, the transparent lens coupled to the waste tank.

According to the invention, the plumbing system comprises a waste water level detection system comprising the contactless sensor, the waste water level detection system configured for rotatory motion of the contactless sensor. The plumbing system may further comprise a transparent lens coupled to the waste tank, the laser beam configured to travel through the transparent lens. The plumbing system may further comprise a controller in electronic communication with the contactless sensor, the controller configured to calculate the waste water level in the waste tank based on sensor data from the contactless sensor. The plumbing system may further comprise a display device electronically coupled to the controller, the display device configured to display the waste water level in the waste tank. The controller may be configured to send the waste water level in the waste tank to the display device. The plumbing system may further comprise an actuator electronically coupled to the controller, the controller configured to actuate the actuator in response to the controller determining a waste water level threshold has been exceeded. The actuator may be configured to at least one of lock a lavatory in the aircraft and close the valve.

An aircraft is disclosed herein as claimed in claim 13.

In various embodiments, the contactless sensor is a laser doppler sensor. The aircraft may further comprise a transparent lens coupled to the waste tank, the contactless sensor configured to emit the laser beam through the transparent lens. The contactless sensor may be disposed external to a cavity defined by the waste tank.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosures, however, may best be obtained by referring to the detailed description and claims when considered in connection with the drawing figures, wherein like numerals denote like elements.
FIG. 1 illustrates a perspective view of a lavatory for an aircraft, in accordance with various embodiments;
FIG. 2 illustrates a schematic view of a plumbing system for an aircraft, in accordance with various embodiments;
FIG. 3 illustrates a schematic view of a waste water level detection system, in accordance with various embodiments; and
FIG. 4 illustrates a schematic view of a control system for a waste water level detection system, in accordance with various embodiments.

### DETAILED DESCRIPTION

The detailed description of exemplary embodiments herein refers to the accompanying drawings, which show exemplary embodiments by way of illustration and their best mode. While these exemplary embodiments are described in sufficient detail to enable those skilled in the art to practice the disclosure, it should be understood that other embodiments may be realized and that logical, chemical, and mechanical changes may be made without departing from the scope of the appended claims. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

Disclosed herein is waste water level detection systems and method for use in aircrafts. The waste water level detection system comprises a contactless sensor configured to emit a laser beam and receive a return signal from the laser beam within a waste tank to determine a waste water level within the waste tank. The waste water level detection system may reduce a part count of typical systems, increase accuracy relative to typical contact systems, and/or provide continuous monitoring, e, in accordance with various embodiments.

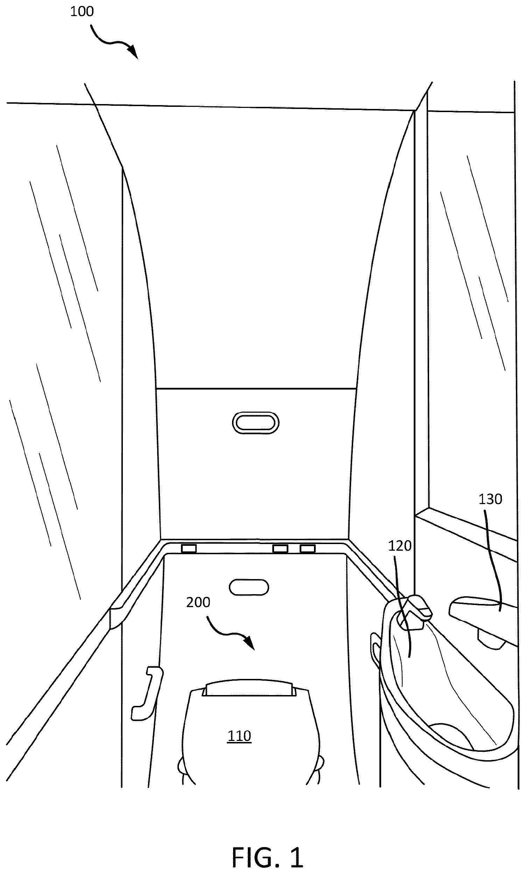

Referring now to FIG. 1, a perspective view of a lavatory 100 of an aircraft is illustrated in accordance with various embodiments. The lavatory 100 comprises a toilet 110, a water basin 120 (e.g., a sink), and a faucet 130. In various embodiments, the lavatory 100 further comprises a plumbing system 200. The plumbing system 200 is in fluid communication with the toilet 110, the water basin 120, and the faucet 130. In this regard, in response to flushing the toilet 110, waste water may be transferred throughout the plumbing system 200 as described further herein. Similarly, in response to running water via the faucet 130, waste water may be transferred throughout the plumbing system 200 as described further herein.

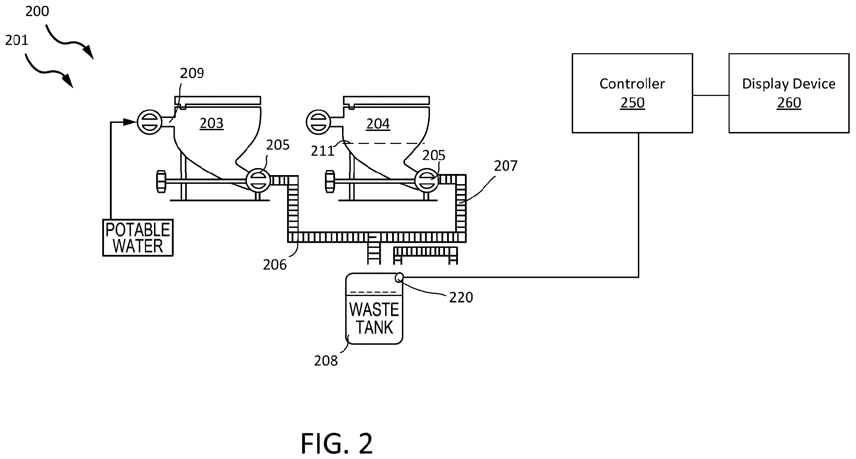

Referring now to FIG. 2, a plumbing system 200 comprising a waste water level detection system 201 is illustrated, in accordance with various embodiments. In various embodiments, the plumbing system 200 comprises a rinse valve 205 associated with each toilet bowl (e.g., toilet bowls 203, 204). The rinse valve 205 is configured to open in response to external activation (e.g., via flushing of a handle, via a sensor detecting a person is no longer in front of the sensor, or the like). In response to opening the rinse valve 205, waste water may flow (e.g., via fluid conduits 206, 207) from the toilet bowl (e.g., toilet bowl 203 or toilet bowl 204) to a waste tank 208. In various embodiments, during the flushing process, potable water may be dispensed through a potable water port 209 disposed in each toilet bowl (e.g., toilet bowls 203, 204). In this regard, any solid waste may be transported from the toilet bowl (e.g., toilet bowl 203 or toilet bowl 204) to the waste tank 208 as waste water, in accordance with various embodiments.

In various embodiments, a contactless sensor 220 is coupled to the waste tank 208. As described further herein, the contactless sensor 220 may be disposed within the waste tank 208, coupled to an external surface of the waste tank 208, or the like. The present disclosure is not limited in this regard. The contactless sensor 220 is in electronic communication with the controller 250.

In various embodiments the contactless sensor 220 is in electronic (i.e., electrical or wireless) communication with a controller 250. In various embodiments, controller 250 may be integrated into computer system of the aircraft. In various embodiments, controller 250 may be configured as a central network element or hub to access various systems and components of the system 201. Controller 250 may comprise a network, computer-based system, and/or software components configured to provide an access point to various systems and components of the system 201. In various embodiments, controller 250 may comprise a processor. In various embodiments, controller 250 may be implemented in a single processor. In various embodiments, controller 250 may be implemented as and may include one or more processors and/or one or more tangible, non-transitory memories and be capable of implementing logic. Each processor can be a general purpose processor, a digital signal processor (DSP), an application specific integrated circuit (ASIC), a field programable gate array (FPGA) or other programable logic device, discrete gate or transistor logic, discrete hardware components, or any combination thereof. Controller 250 may comprise a processor configured to implement various logical operations in response to execution of instructions, for example, instructions stored on a non-transitory, tangible, computer-readable medium configured to communicate with controller 250.

In various embodiments, the contactless sensor 220 comprises a laser doppler sensor. The contactless sensor 220 may be disposed proximate a top portion of the waste tank 208. In this regard, the waste tank 208 may continuously or periodically provide a waste water level in the waste tank 208 to the controller 250. Thus, in response to a waste level exceeding a predetermined threshold (e.g., 90% to 100 % vertical height of the waste water level sensor), the controller 250 may send a signal to the display device 260 a waste tank full condition. Thus, the crew may be informed that the waste tank is full and appropriate actions may be taken. In various embodiments, the controller 250 may be configured to send a warning signal at a predetermined level (e.g., 80% vertical height of the waste water level sensor) to indicate the waste tank should be emptied soon (i.e., a waste tank near full condition signal).

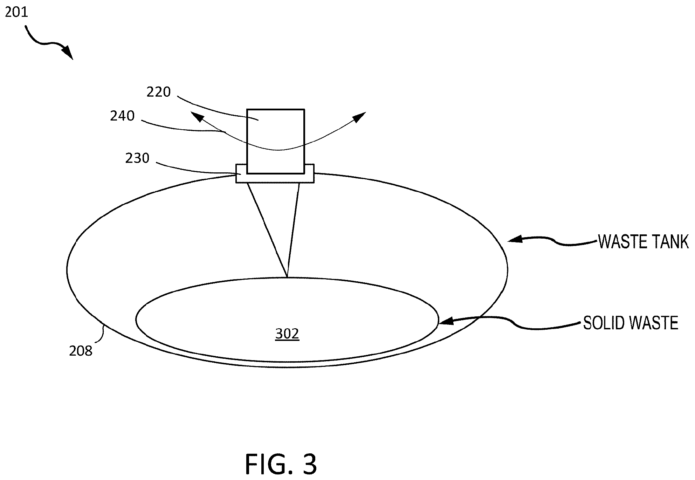

Referring now to FIG. 3, a schematic view of the waste water level detection system 201 is illustrated in accordance with various embodiments. The system 201 comprises the contactless sensor 220 coupled to the waste tank 208 of the plumbing system 200 from FIG. 2. In various embodiments, the contactless sensor 220 may be disposed external to the waste tank 220. For example, a transparent lens 230 may be disposed between a cavity defined by the waste tank 208 and the contactless sensor 220. In various embodiments, the transparent lens 230 is coupled to the waste tank 208 and the contactless sensor 220 is coupled to the transparent lens 230. Although illustrated with transparent lens 230, the present disclosure is not limited in this regard. For example, the contactless sensor 220 may be coupled directly to the waste tank 208 or disposed within the waste tank 208 and still be within the scope of this disclosure. Although illustrated as being coupled to the transparent lens 230, the present disclosure is not limited in this regard. For example, the contactless sensor 220 may be spaced apart from the transparent lens 230 to facilitate motion of the contactless sensor 220 during use, in accordance with various embodiments. In various embodiments, the transparent lens 230 may provide protection from waste water splash, or the like during operation of the plumbing system 200 from FIG. 2.

In various embodiments, the contactless sensor 220 comprises a transceiver. The transceiver is configured to emit a laser beam into the waste tank 208, receive a return signal of the laser beam, calculate a time from emitting the laser beam to receiving the return signal, and determine a height of waste water within the waste tank 208 based on the time and a speed of the laser beam.

According to the invention, the waste water level detection system 201 is configured to facilitate rotary motion 240 of the contactless sensor 220 (e.g., via a ball and socket joint, or the like) to allow the contactless sensor 220 to obtain various data points within the waste tank 208 and map a waste water profile within the waste tank 208.

In various embodiments, the contactless sensor 220 may prevent any erroneous readings due to clogging of waste from contact sensors (e.g., point level sensors). Additionally, in various embodiments, as multiple contact sensors are typically used for waste water level detection, the contactless sensor 220 may reduce a sensor count from multiple to one, in accordance with various embodiments.

In various embodiments, the contactless sensor 220 may provide continuous waste water level data to the controller 250. In this regard, the controller 250 may be configured to send the waste water level data to the display device 260 to be displayed to any member of the cabin crew. Thus, the waste water level may be continuously monitored, in accordance with various embodiments.

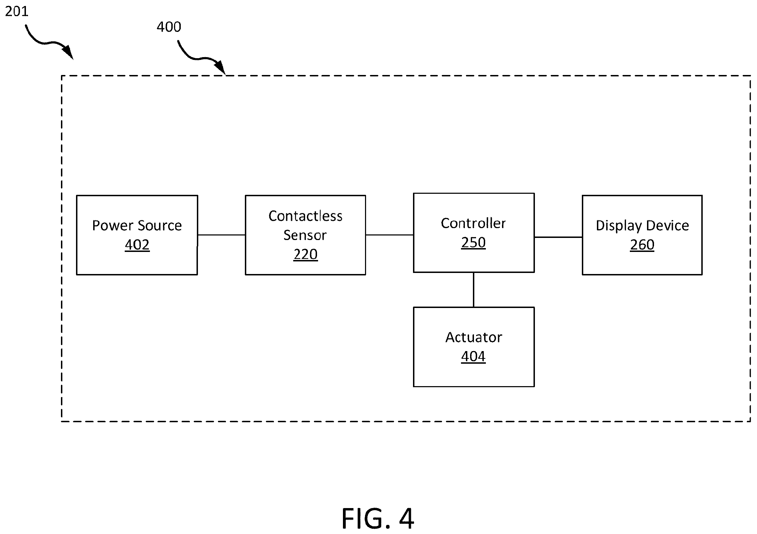

Referring now to FIG. 4, a schematic view of a control system 400 for the system 201 from FIGs. 2 and 3. In various embodiments, the control system 400 comprises the controller 250, the contactless sensor 220, a power source 402, and the display device 260. The power source 402 may be electrically coupled, and configured to power, the contactless sensor 220. In various embodiments, the power source is a battery, or any other power source disposed on an aircraft. The present disclosure is not limited in this regard.

In various embodiments, the control system 400 further comprises an actuator 404 electronically (e.g., via a wired connection or wireless connection) the controller 250. In this regard, in response to the controller 250 determining the waste tank 208 from FIG. 2 and 3 is full, the controller 250 may actuate the actuator 404 to lock a respective lavatory, close a respective valve 205, or the like. In this regard, a lavatory, or toilet may be decommissioned in response to the waste tank 208 for the respective lavatory or toilet being filled.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A plumbing system (200) for an aircraft, comprising:
a waste tank (208);
a toilet bowl (203, 204);
a fluid conduit (206, 207) extending from the waste tank to the toilet bowl;
a valve (205) at least partially disposed in the fluid conduit; and
a waste water level detection system comprising a contactless sensor (220) coupled to the waste tank (208), the contactless sensor (220) configured to emit a laser beam into the waste tank (208) and receive a return signal of the laser beam to determine a waste water level in the waste tank (208) , the waste water level detection system configured to facilitate rotatory motion of the contactless sensor (220) to allow the contactless sensor to obtain various data points within the waste tank (208) and map a waste water profile within the waste tank (208).

2. The plumbing system of claim 1,
further comprising a transparent lens (230) coupled to the waste tank, the laser beam configured to travel through the transparent lens.

3. The plumbing system of claim 1 or 2,
further comprising a controller (250) in electronic communication with the contactless sensor (220), the controller configured to calculate the waste water level in the waste tank based on sensor data from the contactless sensor.

4. The plumbing system of claim 3, further comprising a display device (260) electronically coupled to the controller (250), the display device (260) configured to display the waste water level in the waste tank.

5. The plumbing system of claim 4, wherein the controller (250) is configured to send the waste water level in the waste tank to the display device.

6. The plumbing system of claim 4 or 5, further comprising an actuator (404) electronically coupled to the controller (250), the controller (250) configured to actuate the actuator in response to the controller determining a waste water level threshold has been exceeded.

7. The plumbing system of any of claims 4 to 6, wherein the actuator (404) is configured to at least one of lock a lavatory in the aircraft and close the valve.

8. The plumbing system of any of claims 3 to 7, wherein the controller is configured to:
receive, via the contactless sensor (220), a waste water level data from the contactless sensor (220).

9. The plumbing system of any preceding claim, wherein the waste tank (208) is disposed on an aircraft.

10. The plumbing system of any of claim,
wherein the actuator (404) is configured to close a valve (205) disposed between a toilet bowl (203, 204) and the waste tank (208).

11. The system of any of claims 6 or 7, wherein the contactless sensor (220) comprises a laser doppler sensor.

12. The system of any preceding claim, further comprising the waste tank (208) and a transparent lens (230), the contactless sensor (220) configured to transmit and receive a laser beam through the transparent lens (230), the transparent lens coupled to the waste tank.

13. An aircraft, comprising:
the plumbing system of claim 1; and
a controller (250) configured to receive data from the contactless sensor, the controller configured to determine a waste water level based on the data.

14. The aircraft of claim 13, wherein the contactless sensor (220) is a laser doppler sensor.

15. The aircraft of claim 13 or 14, further comprising a transparent lens (230) coupled to the waste tank (208), the contactless sensor (220) configured to emit the laser beam through the transparent lens (230), and/or
wherein the contactless sensor (220) is disposed external to a cavity defined by the waste tank.

## Patentansprüche

1. Sanitärsystem (200) für ein Luftfahrzeug, umfassend:
einen Abfalltank (208);
eine Toilettenschüssel (203, 204);
eine Fluidleitung (206, 207), die sich vom Abfalltank zur Toilettenschüssel erstreckt;
ein Ventil (205), das mindestens teilweise in der Fluidleitung angeordnet ist; und
ein System zur Messung des Abwasserfüllstands, das einen kontaktlosen Sensor (220) umfasst, der mit dem Abfalltank (208) gekoppelt ist, wobei der kontaktlose Sensor (220) dazu konfiguriert ist, einen Laserstrahl in den Abfalltank (208) zu emittieren und ein Rücksignal des Laserstrahls zu empfangen, um einen Abwasserfüllstand im Abfalltank (208) zu bestimmen, wobei das System zur Messung des Abwasserfüllstands dazu konfiguriert ist, eine Drehbewegung des kontaktlosen Sensors (220) zu erleichtern, um es dem kontaktlosen Sensor zu ermöglichen, verschiedene Datenpunkte innerhalb des Abfalltanks (208) zu erlangen und ein Abwasserprofil innerhalb des Abfalltanks (208) abzubilden.

2. Sanitärsystem nach Anspruch 1,
ferner umfassend eine transparente Linse (230), die mit dem Abfalltank gekoppelt ist, wobei der Laserstrahl dazu konfiguriert ist, durch die transparente Linse zu verlaufen.

3. Sanitärsystem nach Anspruch 1 oder 2,
ferner umfassend eine Steuerung (250) in elektronischer Verbindung mit dem kontaktlosen Sensor (220), wobei die Steuerung dazu konfiguriert ist, den Abwasserfüllstand im Abfalltank basierend auf Sensordaten vom kontaktlosen Sensor zu berechnen.

4. Sanitärsystem nach Anspruch 3, ferner umfassend eine Anzeigevorrichtung (260), die elektronisch mit der Steuerung (250) gekoppelt ist, wobei die Anzeigevorrichtung (260) dazu konfiguriert ist, den Abwasserfüllstand im Abfalltank anzuzeigen.

5. Sanitärsystem nach Anspruch 4, wobei die Steuerung (250) dazu konfiguriert ist, den Abwasserfüllstand im Abfalltank an die Anzeigevorrichtung zu senden.

6. Sanitärsystem nach Anspruch 4 oder 5, ferner umfassend einen Aktuator (404), der elektronisch mit der Steuerung (250) gekoppelt ist, wobei die Steuerung (250) dazu konfiguriert ist, den Aktuator als Reaktion darauf zu betätigen, dass die Steuerung bestimmt, dass ein Abwasserfüllstandsschwellenwert überschritten wurde.

7. Sanitärsystem nach einem der Ansprüche 4 bis 6, wobei der Aktuator (404) dazu konfiguriert ist, mindestens eines von einen Waschraum im Luftfahrzeug zu verriegeln und das Ventil zu schließen.

8. System nach einem der Ansprüche 3 bis 7, wobei die Steuerung ferner zu Folgendem konfiguriert ist:
Empfangen, über den kontaktlosen Sensor (220), von Abwasserfüllstanddaten vom kontaktlosen Sensor (220).

9. Sanitärsystem nach einem der vorhergehenden Ansprüche, wobei der Abfalltank (208) an einem Luftfahrzeug angeordnet ist.

10. Sanitärsystem nach einem der Ansprüche,
wobei der Aktuator (404) dazu konfiguriert ist, ein Ventil (205) zu schließen, das zwischen einer Toilettenschüssel (203, 204) und dem Abfalltank (208) angeordnet ist.

11. System nach einem der Ansprüche 6 oder 7, wobei der kontaktlose Sensor (220) einen Laser-Doppler-Sensor umfasst.

12. System nach einem der vorhergehenden Ansprüche, ferner umfassend den Abfalltank (208) und eine transparente Linse (230), wobei der kontaktlose Sensor (220) dazu konfiguriert ist, einen Laserstrahl durch die transparente Linse (230) zu transmittieren und zu empfangen, wobei die transparente Linse mit dem Abfalltank gekoppelt ist.

13. Luftfahrzeug, umfassend:
das Sanitärsystem nach Anspruch 1; und
eine Steuerung (250), die dazu konfiguriert ist, Daten vom kontaktlosen Sensor zu empfangen, wobei die Steuerung dazu konfiguriert ist, einen Abwasserfüllstand basierend auf den Daten zu bestimmen.

14. Luftfahrzeug nach Anspruch 13, wobei der kontaktlose Sensor (220) ein Laser-Doppler-Sensor ist.

15. Luftfahrzeug nach Anspruch 13 oder 14, ferner umfassend eine transparente Linse (230), die mit dem Abfalltank (208) gekoppelt ist, wobei der kontaktlose Sensor (220) dazu konfiguriert ist, den Laserstrahl durch die transparente Linse (230) zu emittieren, und/oder
wobei der kontaktlose Sensor (220) außerhalb eines durch den Abfalltank definierten Hohlraums angeordnet ist.

## Revendications

1. Système sanitaire (200) pour un aéronef, comprenant :
un réservoir d'eaux usées (208) ;
une cuvette de toilette (203, 204) ;
un conduit de fluide (206, 207) s'étendant du réservoir d'eaux usées vers la cuvette de toilette ;
une vanne (205) au moins partiellement disposée dans le conduit de fluide ; et
un système de détection de niveau d'eaux usées comprenant un capteur sans contact (220) accouplé au réservoir d'eaux usées (208), le capteur sans contact (220) étant configuré pour émettre un faisceau laser dans le réservoir d'eaux usées (208) et recevoir un signal de retour du faisceau laser afin de déterminer un niveau d'eaux usées dans le réservoir d'eaux usées (208), le système de détection de niveau d'eaux usées étant configuré pour faciliter un mouvement rotatif du capteur sans contact (220) afin de permettre au capteur sans contact d'obtenir divers points de données à l'intérieur du réservoir d'eaux usées (208) et de cartographier un profil d'eaux usées à l'intérieur du réservoir d'eaux usées (208).

2. Système sanitaire selon la revendication 1,
comprenant en outre une lentille transparente (230) accouplée au réservoir d'eaux usées, le faisceau laser étant configuré pour passer à travers la lentille transparente.

3. Système sanitaire selon la revendication 1 ou 2,
comprenant en outre un dispositif de commande (250) en communication électronique avec le capteur sans contact (220), le dispositif de commande étant configuré pour calculer le niveau d'eaux usées dans le réservoir d'eaux usées sur la base de données de capteur à partir du capteur sans contact.

4. Système sanitaire selon la revendication 3, comprenant en outre un dispositif d'affichage (260) couplé électroniquement au dispositif de commande (250), le dispositif d'affichage (260) étant configuré pour afficher le niveau d'eaux usées dans le réservoir d'eaux usées.

5. Système sanitaire selon la revendication 4, dans lequel le dispositif de commande (250) est configuré pour envoyer le niveau d'eaux usées dans le réservoir d'eaux usées au dispositif d'affichage.

6. Système sanitaire selon la revendication 4 ou 5, comprenant en outre un actionneur (404) couplé électroniquement au dispositif de commande (250), le dispositif de commande (250) étant configuré pour actionner l'actionneur en réponse au dispositif de commande qui détermine qu'un seuil de niveau d'eaux usées a été dépassé.

7. Système sanitaire selon l'une quelconque des revendications 4 à 6, dans lequel l'actionneur (404) est configuré pour au moins l'un du verrouillage d'un bloc toilettes dans l'aéronef et de la fermeture de la vanne.

8. Système sanitaire selon l'une quelconque des revendications 3 à 7, dans lequel le dispositif de commande est configuré pour : recevoir, par l'intermédiaire du capteur sans contact (220), des données de niveau d'eaux usées à partir du capteur sans contact (220).

9. Système sanitaire selon l'une quelconque revendication précédente, dans lequel le réservoir d'eaux usées (208) est disposé sur un aéronef.

10. Système sanitaire selon l'une quelconque revendication précédente,
dans lequel l'actionneur (404) est configuré pour fermer une vanne (205) disposée entre une cuvette de toilette (203, 204) et le réservoir d'eaux usées (208).

11. Système selon l'une quelconque des revendications 6 ou 7, dans lequel le capteur sans contact (220) comprend un capteur Doppler à laser.

12. Système selon l'une quelconque revendication précédente, comprenant en outre le réservoir d'eaux usées (208) et une lentille transparente (230), le capteur sans contact (220) étant configuré pour transmettre et recevoir un faisceau laser à travers la lentille transparente (230), la lentille transparente étant accouplée au réservoir d'eaux usées.

13. Aéronef, comprenant :
le système sanitaire selon la revendication 1 ; et
un dispositif de commande (250) configuré pour recevoir des données à partir du capteur sans contact, le dispositif de commande étant configuré pour déterminer un niveau d'eaux usées sur la base des données.

14. Aéronef selon la revendication 13, dans lequel le capteur sans contact (220) est un capteur Doppler à laser.

15. Aéronef selon la revendication 13 ou 14, comprenant en outre une lentille transparente (230) accouplée au réservoir d'eaux usées (208), le capteur sans contact (220) étant configuré pour émettre le faisceau laser à travers la lentille transparente (230), et/ou
dans lequel le capteur sans contact (220) est disposé à l'extérieur d'une cavité définie par le réservoir d'eaux usées.
